# EUROPÄISCHE PATENTSCHRIFT

(11) **EP 2 904 152 B1**
(45) Veröffentlichungstag und Bekanntmachung des Hinweises auf die Patenterteilung: **03.07.2019**
(21) Anmeldenummer: 13789523.1
(22) Anmeldetag: 05.11.2013
(51) Int. Cl.: E01C 19/05

(54) **SYSTEM, VERFAHREN UND FÖRDERFAHRZEUG ZUM NEUHERSTELLEN, SANIEREN ODER RÜCKBAUEN EINER STRASSE**
SYSTEM, METHOD AND CONVEYANCE VEHICLE FOR NEWLY PRODUCING, REPAIRING OR REMOVING A ROAD
SYSTÈME, PROCÉDÉ ET VÉHICULE DE TRANSPORT POUR RÉFECTIONNER, RÉNOVER OU RECONSTRUIRE UNE ROUTE

(30) Priorität: 15.11.2012 DE 102012220876
(43) Veröffentlichungstag der Anmeldung: 12.08.2015
(73) Patentinhaber: K&K Maschinenentwicklungs GmbH & Co. KG, 81827 München (DE)
(72) Erfinder: KNAPE, Steffen, 48480 Lünne (DE); KNAPE, Christian, 81827 München (DE)
(74) Vertreter: Manitz Finsterwald Patent- und Rechtsanwaltspartnerschaft mbB
(86) Internationale Anmeldenummer: PCT/EP2013/073063
(87) Internationale Veröffentlichungsnummer: WO 2014/075955

(56) Entgegenhaltungen:
- DE-U1- 29 519 719
- US-A- 5 026 205
- US-E- R E35 788

## Beschreibung

Die vorliegende Erfindung betrifft ein System zum Neuherstellen, Sanieren oder Rückbauen einer Straße, insbesondere einer Autobahn, mit wenigstens einem Straßenbaufahrzeug zum Durchführen von Arbeiten an der Straße oder am Untergrund für die Straße.

Für Arbeiten im Straßenbau werden verschiedene bodenfahrbare Arbeitsfahrzeuge wie beispielsweise Planierraupen, Grader, Walzen, Asphaltfertiger und dergleichen eingesetzt. In vielen Fällen muss zu solchen Arbeitsfahrzeugen Material antransportiert und/oder von diesen abtransportiert werden. So muss beispielsweise bei einer Komplettsanierung einer Fahrbahn Abraum aus abgefrästem Asphalt und Untergrundmaterial abtransportiert werden. Beim Neubau einer Autobahn muss Material für den Untergrund und neuer Asphalt antransportiert werden. Außerdem kann am Arbeitsort Bedarf an sonstigen Materialien wie Wasser, Treibstoff, Beton und dergleichen bestehen.

Das An- bzw. Abtransportieren der unterschiedlichen Materialien erfolgt üblicherweise mittels Lastkraftwagen. Dies ist insofern nachteilig, als hierbei eine hohe Lärm- und Staubbelastung der Umgebung auftritt. Zudem ist es oft schwierig, den Lastkraftverkehr im Baustellenbereich in effektiver Weise zu koordinieren sowie stets die rechtzeitige Verfügbarkeit von Lastkraftwagen mit der gewünschten Ladung und in der gewünschten Anzahl sicherzustellen. Dies gilt in besonderer Weise bei schlecht zugänglichen Trassen sowie bei weiten Zufahrtswegen. All dies führt dazu, dass beispielsweise bei der Autobahnsanierung eine relativ lange Sperrung der betreffenden Fahrspur oder sogar der kompletten Richtungsfahrbahn erforderlich ist, was häufig mit schweren Verkehrsbehinderungen während der gesamten Bauzeit verbunden ist. Ein weiteres Problem besteht in dem kontinuierlichen Befahren des Planums mit Baufahrzeugen und Lastkraftwagen während der Bauphase, welches zu ungleichmäßigen Verdichtungen und anderen Beschädigungen am Planum führen kann.

Die US 5,026,205 A offenbart ein System zum automatischen Austausch eines Fahrbahnbelags, welches aus einer Anordnung von aneinandergereihten Arbeits- und Fördereinheiten besteht. An der Spitze der Reihe befindet sich ein angetriebenes Zugfahrzeug, welches über ein Zugmittel die nachfolgende Einheit zieht. Die übrigen Einheiten des Systems sind mit Kettenfahrwerken ausgestattet. Am rückwärtigen Bereich des Zugfahrzeugs befindet sich ein Hammerwerk zum Zertrümmern des Betonbelags. Der Betonschutt wird auf Förderbändern transportiert und schließlich in bereitstehende Lastwagen geschüttet.

Der Erfindung liegt die Aufgabe zugrunde, das Durchführen von Arbeiten mit Straßenbaufahrzeugen zu vereinfachen.

Die Lösung der Aufgabe erfolgt durch ein System mit den Merkmalen des Anspruchs 1. Bei einem erfindungsgemäßen System sind Mittel zum An- und Abtransport von Gegenständen zu bzw. von dem Straßenbaufahrzeug vorgesehen, mit mehreren zusammenkoppelbaren Förderfahrzeugen, die jeweils mindestens eine Transportbahn aufweisen, auf welcher die Gegenstände längs der Förderfahrzeuge verfahrbar sind und die so ausgebildet ist, dass die Transportbahnen zusammengekoppelter Förderfahrzeuge aneinander anschließen. Ferner sind Transportkörper für die Gegenstände vorgesehen, die zu einer Verfahrbarkeit längs aneinander anschließender Transportbahnen von Förderfahrzeug zu Förderfahrzeug ausgebildet sind. Es kann auch sein, dass die Gegenstände Stückgut sind und selbst solche Transportkörper bilden.

Darüber hinaus betrifft die vorliegende Erfindung ein entsprechendes Verfahren und ein Förderfahrzeug zur Verwendung in einem solchen System bzw. einem solchen Verfahren.

Bei einem erfindungsgemäßen Verfahren ist vorgesehen, dass die Gegenstände mittels mehrerer zusammenkoppelbarer Förderfahrzeuge transportiert werden, wobei die Förderfahrzeuge jeweils mindestens eine Transportbahn aufweisen, auf welcher die Gegenstände längs der Förderfahrzeuge verfahrbar sind und die so ausgebildet ist, dass die Transportbahnen zusammengekoppelter Förderfahrzeuge aneinander anschließen, wobei die Gegenstände auf den Förderfahrzeugen mittels Transportkörpern transportiert werden oder als Stückgut einschließlich wenigstens eine Straßenbau-Arbeitseinrichtung, insbesondere Maschine, bildende Transportkörper ausgebildet sind, wobei die Transportkörper auf den Förderfahrzeugen längs aneinander anschließbarer Transportbahnen von Förderfahrzeug zu Förderfahrzeug verfahren werden.

Ein erfindungsgemäßes Förderfahrzeug zur Verwendung in einem erfindungsgemäßen System oder einem erfindungsgemäßen Verfahren weist ein Bodenfahrwerk und mindestens eine Transportbahn auf, auf welcher Gegenstände längs des Förderfahrzeugs verfahrbar sind, wobei ein Antrieb zum Verfahren von Transportkörpern längs der Transportbahnen vorgesehen ist.

Erfindungsgemäß ist wenigstens ein Transportkörper als offener oder geschlossener Behälter ausgebildet. Offene Behälter sind einfach zu beladen, während geschlossene Behälter einen guten Schutz für die zu transportierenden Gegenstände bieten. Derartige Behälter können somit je nach Ausgestaltung Flüssigkeiten wie Wasser oder Treibstoff, Schüttgüter wie z.B. Kies oder auch Bauteile für Entwässerungseinrichtungen ebenso wie Werkzeuge aufnehmen und diese durch Verfahren auf den Transportbahnen zu dem Straßenbaufahrzeug hin oder von diesem weg befördern. Wenigstens ein Transportkörper kann auch als plattenartiger Träger ausgebildet sein, um so einen Transport von schweren und sperrigen Gütern wie Betonplatten zu ermöglichen. Zum Herbeischaffen von heißem Asphalt können einige oder alle Transportkörper auch als Thermobehälter ausgebildet sein. Mittels einer Anordnung von unterschiedlich gestalteten Transportkörpern kann somit eine Vielzahl von verschiedenartigen Materialien, Maschinen und Bauteilen unter geringem Platzbedarf zu einer Straßenarbeitsstelle bzw. von dieser weg transportiert werden, wodurch ein besonders effektives Arbeiten möglich ist.

Erfindungsgemäß wird also anstelle von einzelnen voneinander unabhängigen Lastkraftwagen ein einheitliches Transportsystem aus zusammengekoppelten Förderfahrzeugen eingesetzt, um Materialien unterschiedlicher Art zum Arbeitsort des Straßenbaufahrzeugs oder von diesem weg zu befördern. Die Transportkörper können hierbei auf Fahrbahnen, Rollenbahnen, Gleitbahnen, Schwebebahnen, Hängebahnen, Förderbändern, Förderkettenbahnen oder sonstigen Bahnen verfahren werden.

Eine Gruppe von mehreren zusammengekoppelten Förderfahrzeugen wird im Folgenden auch als "Zug aus Förderfahrzeugen" bezeichnet. Die Förderfahrzeuge können hierbei je nach Anwendung mechanisch und/oder logisch, d.h. über eine entsprechende Steuerung, miteinander gekoppelt sein.

Ein wesentlicher Vorteil der Erfindung besteht darin, dass durch die Verwendung von Transportkörpern ein wesentlich schnelleres An- und Abtransportieren von Maschinen und Material möglich ist. Zudem tritt aufgrund der Verwendung von Transportkörpern kaum eine Belastung der Umgebung auf. Ein weiterer Vorteil besteht darin, dass alle Arten von Materialien, also insbesondere auch Wasser, Bauteile für Entwässerungseinrichtungen und Treibstoff neben Untergrundmaterial und Asphalt transportiert werden können. Dies kann insbesondere gleichzeitig erfolgen, indem verschiedene Transportkörper mit unterschiedlichem Material befüllt werden.

Ein weiterer Vorteil der Erfindung besteht in der Möglichkeit, mehrere Transportkörper gleichzeitig zu transportieren. Dies erhöht den Durchsatz gegenüber dem Transport mittels Lastkraftwagen beträchtlich. Dadurch kann die Bauzeit erheblich verkürzt werden, was insbesondere hinsichtlich der problematischen Fahrspur- oder Straßensperrungen vorteilhaft ist.

Ferner ist es aufgrund der Erfindung möglich, die Sanierung einer Autobahn derart vorzunehmen, dass auf der zu sanierenden Richtungsfahrbahn jeweils nur ein Fahrstreifen den Bauarbeiten unterzogen wird, wobei der Verkehr auf den verbleibenden Fahrstreifen, gegebenenfalls unter Hinzunahme des Standstreifens, neben der Baustelle vorbeigeführt wird. Hinsichtlich des Verkehrsflusses findet durch die Baumaßnahmen also lediglich eine Verringerung der Fahrbahnbreite um einen Fahrstreifen oder die Wegnahme des Standstreifens auf der betreffenden Richtungsfahrbahn statt, während die entgegengesetzte Richtungsfahrbahn unbeeinflusst bleibt. Auf diese Weise kann z.B. ein Fahrstreifen nach dem anderen saniert werden, bis die gesamte Richtungsfahrbahn saniert ist. Das Sanieren einer Richtungsfahrbahn kann also unter wesentlich weniger Verkehrsbehinderungen durchgeführt werden als im Falle von üblichen großflächigen Baustellen. Ein weiterer Vorteil des erfindungsgemäßen Systems besteht darin, dass für die gesamte Baustelle nur eine einzige Baustelleneinrichtung benötigt wird. Diese wird vorzugsweise auf einem vorhandenen Autobahnrastplatz vorgesehen. Von dieser Baustelleneinrichtung aus wird die Bauspitze mit dem Straßenbaufahrzeug mit Neustoffen versorgt. Gleichzeitig werden Altstoffe auf der Baustelleneinrichtung entsorgt oder einem Recycling-Prozess unterzogen. Die Ver- und Entsorgung der Baustelleneinrichtung erfolgt bevorzugt in grundsätzlich bekannter Weise mittels Lastkraftwagen. Bei Bedarf ist es aufgrund der Erfindung auch möglich, von einer einzigen Baustelleneinrichtungsfläche aus beide Richtungsfahrbahnen einer Autobahn zu versorgen und zu entsorgen. Eine umständliche Umleitung des Verkehrs auf die jeweils andere Richtungsfahrbahn ist entbehrlich.

Die Förderfahrzeuge können auch zwei oder mehr parallele Transportbahnen aufweisen, zwischen denen die Transportkörper gewechselt werden können.

Die parallelen Fahrwege ermöglichen einen kontinuierlichen An- und/oder Abtransport von Material, indem die Transportkörper auf einer Fahrbahn zu dem Arbeitsfahrzeug verfahren und dort befüllt bzw. entladen werden und auf einer anderen Fahrbahn be- bzw. entladen wieder von dem Arbeitsfahrzeug weggefahren werden. Mehrere Transportkörper können so kontinuierlich hintereinander zu dem Arbeitsfahrzeug hin und von diesem weg verfahren werden, um Material an- und/oder abzutransportieren. Die Transportkörper sind auf den Fahrbahnen bevorzugt in beide Richtungen verfahrbar. Das System ist dadurch besonders flexibel.

Die Transportbahnen verlaufen bevorzugt zumindest im Wesentlichen horizontal und/oder schließen zumindest im Wesentlichen absatzlos aneinander an. Damit ist eine Übergabe der Transportkörper von Förderfahrzeug zu Förderfahrzeug besonders gut möglich. Zwischen den Übergabestellen könnten die Transportbahnen auch nicht horizontal verlaufen, beispielsweise eine Senke bilden. Es könnte dann genügen, die Transportkörper nur am Anfang und/oder Ende jeder Transportbahn eines Förderfahrzeugs anzutreiben. Dazwischen würden sich die Transportkörper durch ihre Masse von selbst fortbewegen.

Nach einer bevorzugten Ausgestaltung der Erfindung sind zwei Fahrbahnen übereinander angeordnet. Dies hat sich als besonders vorteilhaft herausgestellt, insbesondere zur Be- und Entladung der Transportkörper.

Nach einer weiteren Ausgestaltung der Erfindung ist an mindestens einem Förderfahrzeug eine Einrichtung zum zeitweisen Entfernen eines Transportkörpers von einer Fahrbahn oder zum Wechseln der Fahrbahn vorgesehen. Die Flexibilität des Systems ist dadurch weiter erhöht. Insbesondere kann dadurch ein Umsortieren der Transportkörper und ein Zwischenlagern einzelner Transportkörper erfolgen. Gemäß einer Ausführungsform ist wenigstens einer der Transportkörper mit Raupenketten versehen und in der Lage, bei Erreichen des Zielortes seitlich von der betreffenden Transportbahn herunterzufahren. Dies ermöglicht ein effektives Entladen des transportierten Gutes von dem Transportkörper.

Nach noch einer Ausgestaltung der Erfindung ist an mindestens einem, insbesondere an einem Ende einer Fahrzeuggruppe anzuordnenden Förderfahrzeug eine Vorrichtung zur maschinellen Übergabe von Transportgut zwischen dem Förderfahrzeug und einem Arbeitsfahrzeug und/oder einer Be- und/oder Entladestelle vorgesehen. Dies erleichtert die Be- und/oder Entladung der Transportkörper an dem Arbeitsfahrzeug.

Bevorzugt ist des Weiteren mindestens ein Förderfahrzeug mit einer seitlichen Entlademöglichkeit für die Transportkörper ausgestattet. Dadurch können die Transportkörper seitlich entnommen und gegen andere Transportkörper ausgetauscht werden. So ist es möglich, einen mit Abfuhrmaterial gefüllten Transportkörper an einer geeigneten Stelle gegen einen leeren Transportkörper auszutauschen, oder einen leeren Transportkörper gegen einen anderen Transportkörper mit Zufuhrmaterial. Ebenso ist es möglich, einen mit Abraum gefüllten Transportkörper gegen einen mit Zufuhrmaterial gefüllten Transportkörper zu tauschen. Die Entlademöglichkeit kann dabei auch allein darin bestehen, dass der Wagen eine Zugriffsmöglichkeit für ein Be- und Entladegerät schafft wie beispielsweise ein Bagger oder ein Hubfahrzeug.

Nach einer besonders bevorzugten Ausgestaltung ist an mindestens einem Förderfahrzeug eine Einrichtung zum Absetzen und/oder Aufnehmen von Transportkörpern auf bzw. von dem Boden vorgesehen. Dies ermöglicht ein sehr schnelles Be- und/oder Entladen einer erfindungsgemäßen Anordnung von Förderfahrzeugen.

Die Transportkörper können zwischen einem ersten Zug aus Förderfahrzeugen und einem zweiten Zug aus Förderfahrzeugen ausgetauscht werden, wobei der erste Zug aus Förderfahrzeugen während der durchzuführenden Arbeiten zusammen mit dem Straßenbaufahrzeug ein Baumodul bildet und der zweite Zug aus Förderfahrzeugen während der durchzuführenden Arbeiten zwischen dem ersten Zug aus Förderfahrzeugen und einer Ver- und Entsorgungseinrichtung, insbesondere Lagerplatz, hin und her pendelt. Ein besonders günstiger Arbeitsbetrieb wird nämlich dadurch ermöglicht, dass ein Teil der vorhandenen Förderfahrzeuge an dem Straßenbaufahrzeug verbleibt, während der übrige Teil der Förderfahrzeuge zwischen der Baustelle und einem Materialversorgungsort - z.B. an einem Autobahnrastplatz - hin und her pendelt. Die pendelnden Förderfahrzeuge verbleiben stets nur während des relativ kurzen Zeitraums des Materialwechsels bei den an dem Straßenbaufahrzeug befindlichen Förderfahrzeugen, mit welchen sie während dieses Zeitraums vorzugsweise mechanisch und/oder logisch zusammengekoppelt werden.

Bevorzugt sind die Transportkörper ohne zusätzliche Verlademittel wie Kräne von Förderfahrzeug zu Förderfahrzeug verfahrbar. Weiterhin sind die Transportkörper vorzugsweise direkt auf den Transportbahnen von Förderfahrzeug zu Förderfahrzeug verfahrbar. Mit anderen Worten dienen ausschließlich die Transportbahnen selbst zur Übergabe der Transportkörper von Förderfahrzeug zu Förderfahrzeug, indem z.B. die Transportkörper mittels eines eigenen Antriebs von einem am Fahrzeugende befindlichen Abschnitt einer Transportbahn auf die Transportbahn des nächsten Förderfahrzeugs wechseln oder indem ein solcher Abschnitt die Transportkörper aktiv auf die Transportbahn des nächsten Förderfahrzeugs befördert. Die aufwändige und kostspielige Bereitstellung von Portalkränen oder dergleichen kann so vermieden werden.

Es ist nicht zwingend erforderlich, für jedes zu transportierende Ladegut einen Behälter oder Träger vorzusehen. Vielmehr kann ein auf den Transportbahnen zu transportierendes Stück Ladegut selbst einen Transportkörper bilden. In dieser Hinsicht kann wenigstens ein Transportkörper als auf den Transportbahnen zu transportierendes Stückgut ausgebildet sein. Mit anderen Worten können die Transportbahnen speziell für einen Transport von Transportkörpern in Form von bestimmten schweren und/oder sperrigen Bauteilen - auch ohne Behälter oder Träger - ausgelegt sein. Auf diese Weise können Betonplatten und dergleichen zur gewünschten Arbeitsstelle oder von dieser weggebracht werden, indem sie z.B. direkt auf Rollenbahnen der jeweiligen Förderfahrzeuge befördert werden.

Weiterhin kann wenigstens ein Transportkörper als wenigstens eine Straßenbau-Arbeitseinrichtung, insbesondere Baumaschine, ausgebildet sein. Somit können die Transportbahnen dazu genutzt werden, schwere Arbeitsvorrichtungen unterschiedlicher Art auf einfache Weise zu einer Straßenbaustelle zu befördern. Als eine Straßenbau-Arbeitseinrichtung kann nicht nur eine Maschine wie z.B. ein Bagger oder ein Hubfahrzeug, sondern auch eine Mess- oder Prüfvorrichtung, ein Überwachungsgerät oder eine komplexe Einrichtung wie eine mobile Tankstelle vorgesehen sein. Ein Transportkörper im Sinne der Erfindung kann also nicht nur zum Aufnehmen oder Tragen einer Maschine ausgebildet sein, sondern auch selbst als Maschine, Messvorrichtung oder dergleichen ausgebildet sein. Die Maschine kann dabei auch durch Zusammenschließen von zwei oder mehr Transportkörpern gebildet werden. Auf diese Weise können Messungen oder Bauarbeiten besonders effektiv ausgeführt werden, da die Maschine nicht mittels Lastkraftwagen herbei- und wieder weggeschafft werden muss.

Weiterhin kann eine Transportbrücke vorgesehen sein, auf welcher die Transportkörper quer zu dem Verlauf der Straße verfahrbar sind, wobei die Transportbrücke zumindest eine Fahrspur der Straße überspannt und in der Lage ist, Transportkörper von einem unter der Transportbrücke befindlichen Förderfahrzeug aufzunehmen und/oder an ein unter der Transportbrücke befindliches Förderfahrzeug abzugeben. Eine solche Transportbrücke ermöglicht ein besonders schnelles und einfaches Be- und Entladen eines Zuges aus Förderfahrzeugen.

Das Straßenbaufahrzeug kann als Zugfahrzeug für die als Anhänger ausgebildeten Förderfahrzeuge ausgebildet sein. Die Förderfahrzeuge benötigen dann keinen eigenen Antrieb. Bei Bedarf kann jedoch auch jedes Förderfahrzeug mit einem eigenen Antrieb ausgestattet sein.

Vorzugsweise weist/weisen das Straßenbaufahrzeug und/oder die Förderfahrzeuge jeweils mindestens ein Radfahrwerk auf. Je nach Anwendung kann jedoch auch ein Raupenfahrwerk oder ein Schreitwerk zum Einsatz kommen.

Bei manchen Anwendungen kann es vorteilhaft sein, dass das Straßenbaufahrzeug und/oder die Förderfahrzeuge jeweils ein Schienenfahrwerk aufweist/aufweisen. An der Baustelle können zu diesem Zweck Behelfsschienen verlegt werden.

Es kann ferner sein, dass die Förderfahrzeuge jeweils aus wenigstens zwei trennbaren Teilen zusammengesetzt sind, wobei ein Teil das Fahrwerk und ein anderer Teil die Transportbahn umfasst. Der die Transportbahn umfassende Teil des Förderfahrzeugs kann dann bei Bedarf auf einfache Weise auf ein separates Transportmittel wie die Eisenbahn verladen werden.

Vorzugsweise sind die Transportkörper hinsichtlich ihrer äußeren Abmessungen, ihres Gewichts und/oder ihrer Oberflächenbeschaffenheit für den Transport auf den Transportbahnen angepasst oder umgekehrt. Mit anderen Worten sind die Transportkörper und die Transportbahnen aufeinander abgestimmt, um so eine effektive Beförderung, insbesondere ohne zusätzliche Verlademittel wie Kräne, zu ermöglichen. Insbesondere können die Breite und/oder die maximale Auflagelast der Transportbahnen bereits bei der Konstruktion eines erfindungsgemäßen Systems derart gewählt werden, dass auf ihnen der Transport von an einer Arbeitsstelle benötigten Maschinen oder Großbauteilen wie Betonplatten möglich ist. Um einen möglichst effektiven Transport zu ermöglichen, können die Transportkörper besondere Abrollflächen für Rollen von Rollenbahnen an einer oder mehreren ihrer Seiten aufweisen. Ferner könnten die Transportkörper mit einem im Wesentlichen vollständig glatten Boden versehen sein. Damit kann der Transportkörper in vorteilhafter Weise verfahren und/oder geführt werden. Die Abrollflächen sind dabei insbesondere so ausgebildet, dass sich ein ausreichender Reibwiderstand zwischen den Rollen einer Rollenbahn und dem Transportkörper ergibt, um ein Durchdrehen der Rollen zu vermeiden oder zu verringern. Auch eine Ausbildung der Abrollfläche zur Verringerung der Belastung der Rollen einer Rollenbahn und damit deren Verschleiß, insbesondere beim Übergang des Transportkörpers von einer Rolle zur nächsten, ist vorteilhaft. Beispielsweise kann eine Rampe oder Rundung am Ende der Abrollfläche vorgesehen sein.

Das Vorsehen einer Abrollfläche an der Oberseite des Transportkörpers kann dazu dienen, ein Abrollen einer Rolle auf der Oberseite des Transportkörpers zu verbessern. Mit einer solchen Rolle kann beispielsweise das Abkippen des Transportkörpers beim Übergang des Transportkörpers von einem Förderfahrzeug zum anderen verhindert werden.

Abrollflächen an der Seite des Transportkörpers dienen zur Seitenführung über Rollen von Rollenbahnen. Die Abrollflächen können sich auch in einer speziellen Nut oder an einem Steg an der Unterseite des Transportkörpers befinden. An den Transportbahnen kann zusätzlich zu einer vorhandenen Seitenführung eine weitere Führung vorgesehen sein, welche ähnlich wie eine Leitplanke den Transportkörper auch bei einem Versagen der Seitenführung am Verlassen der Transportbahn hindert.

Zum Verfahren der Transportkörper längs der Transportbahnen kann an diesen ein Antrieb vorgesehen sein, beispielsweise angetriebene Rollen. Ein Antrieb kann aber auch an den Transportkörpern selbst oder an anderer Stelle der Förderfahrzeuge, beispielsweise seitlich der Transportbahnen, vorgesehen sein. Gemäß einer Ausführungsform der Erfindung weisen die Transportkörper einen führerlosen Antrieb auf, d.h. die angetriebene Bewegung des Transportkörpers erfolgt automatisch gesteuert oder ferngesteuert. Es ist dann nicht notwendig, die Transportkörper mit Fahrpersonal zu besetzen. Ein Antrieb am Förderfahrzeug hat den Vorteil, dass die Transportkörper sehr einfach ausgebildet sein können, beispielsweise als einfache Transportboxen. Bei einer Ausführungsform der Erfindung weist ein Förderfahrzeug einen Antrieb zum Verfahren der Transportkörper längs der Transportbahnen auf, wobei die Transportkörper selbst keinen eigenen Antrieb aufweisen.

Bei einem Antrieb der Transportkörper mittels Rollen können alle vorhandenen Rollen angetrieben sein, beispielsweise durch einen zentralen Antrieb, oder es kann nur ein Teil der Rollen angetrieben sein. Z.B. können wenigstens zwei in Fahrtrichtung hintereinander befindliche Rollen durch jeweilige individuelle Antriebe oder durch einen gemeinsamen Antrieb angetrieben sein. Es können auch jeweils zwei bezüglich der Transportbahn gegenüberliegende Rollen mit individuellen Antrieben oder mit einem gemeinsamen Antrieb ausgestattet sein. Bei der letztgenannten Variante kann in dem Antriebsstrang, welcher den Motor des Antriebs mit den beiden Rollen verbindet, ein Differentialgetriebe vorgesehen sein. Dieses Differentialgetriebe kann als Selbst- oder Fremdsperrdifferential ausgeführt sein. Weiterhin kann eine Vorrichtung zum so genannten "Torque Vectoring" vorgesehen sein. Derartige Vorrichtungen können eine Dreh- oder Schwenkbewegung der Transportkörper am Übergang von einem Förderfahrzeug zum nächsten Förderfahrzeug unterstützen. Derartige Drehbewegungen können insbesondere hilfreich sein, wenn die Förderfahrzeuge in einer Kurve stehen. Eine Schwenkbewegung der Transportkörper kann auch durch eine Differenzdrehzahl von gegenüberliegenden Rollen, vorzugsweise am ersten bzw. letzten Rollenpaar des jeweiligen Wagens, eingeleitet werden. Das Maß der Schwenkbewegung kann hierbei durch Sensoren an den Enden einer fest gekuppelten Fahrzeuggruppe ermittelt werden. Zusammen mit dem zurückgelegten Weg der Fahrzeuggruppe kann der Knickwinkel zwischen den Förderfahrzeugen geschätzt werden, und zwar auch bei solchen Förderfahrzeugen, an denen kein Sensor angebracht ist. Die Ermittlung der einzelnen Knickwinkel erfolgt vorzugsweise automatisiert.

Der Antrieb der Rollen erfolgt vorzugsweise elektrisch, z.B. mittels eines Elektromotors. Vorzugsweise kommt eine geschaltete Reluktanzmaschine, auch als Switched-Reluctance-Motor oder SRM bezeichnet, zur Anwendung. Derartige Motoren zeichnen sich durch eine hohe Robustheit und eine einfache Bauweise aus. Ferner ist die Drehzahl-Moment-Kennlinie für die vorliegende Anwendung gut geeignet und der Wirkungsgrad ist über einen großen Drehzahlbereich ausreichend hoch. Es kann auch ein Umrichter vorgesehen sein, welcher vorzugsweise nahe am Motor, z.B. direkt im zugehörigen Motorgehäuse, angeordnet ist.

Die Drehbewegung der Ausgangswelle des Elektromotors kann dabei direkt oder unter Zwischenschaltung eines Getriebes an die Rollen übertragen werden. Alternativ kann der Antrieb der Rollen auch hydraulisch, pneumatisch oder mechanisch bewerkstelligt werden. Auch könnte die Anordnung aus Transportbahnen und Transportkörpern als Magnetschwebebahn oder Luftschwebebahn ausgebildet sein.

Ein Antrieb mittels Rollen kann derart ausgebildet sein, dass eine Rückgewinnung von Energie (Rekuperation) möglich ist, z.B. beim Abbremsen eines Transportkörpers oder beim Betrieb einer Rollenbahn im Gefälle.

Der Betriebszustand des Rollenantriebs und/oder von dessen Komponenten kann periodisch und/oder kontinuierlich durch eine geeignete Einrichtung erfasst werden. Diese Einrichtung kann fest installiert sein oder manuell bereitgestellt werden. Die Bereitstellung kann auch automatisiert erfolgen.

Wenigstens eine Rolle des Rollenantriebs kann zudem mit einer Bremseinrichtung ausgestattet sein. Dadurch kann eine selbständige Bewegung der Transportkörper - z.B. bei einer Störung des Rollenantriebs - verhindert werden. Die Bremseinrichtung ist vorzugsweise derart ausgeführt, dass sie in Richtung des sicheren Zustands ausfällt. Vorzugsweise wird die Bremseinrichtung mechanisch betätigt und elektrisch, pneumatisch, hydraulisch oder mechanisch gelöst. Es kann auch eine automatisch wirkende Bremse vorgesehen sein, welche vorzugsweise mit einer Notlösevorrichtung ausgestattet ist. Alternativ oder zusätzlich kann eine Vorrichtung zur Beschränkung der Maximalgeschwindigkeit der Transportkörper in den Rollenantrieb integriert sein. Weiterhin kann der Rollenantrieb eine Vorrichtung umfassen, welche die Bewegung des Transportkörpers in eine bestimmte - vorzugsweise wählbare - Richtung unterbindet. Die Wirkungsrichtung dieser Vorrichtung kann manuell oder ferngesteuert umgestellt bzw. ganz aufgehoben werden.

Wenigstens eine der Rollen des Rollenantriebs kann auch mit einer Vorrichtung zum Erfassen der Drehrichtung, des Drehwinkels, der Drehzahl und/oder der Drehbeschleunigung der Rolle versehen sein. Die Vorrichtung kann ein entsprechendes Signal ausgeben, anhand dessen das Durchdrehen oder Blockieren von Rollen des Rollenantriebs erkannt werden kann.

Die Rollen des Rollenantriebs können eine Vollgummibandage umfassen. Alternativ kann auch eine Luftreifenbandage vorgesehen sein. Je nach Anwendung können die Rollen aber auch als Stahlrollen ausgebildet sein. Sollten die Rollen als Vollgummirollen ausgeführt sein, kann die Lauffläche ein Profil zum Erzielen einer besseren Lastverteilung, z.B. ein Tonnenprofil, aufweisen. Weiterhin kann die Steifigkeit einzelner als Vollgummirollen ausgeführter Rollen durch wenigstens eine Längs- und/oder Querrille beeinflusst werden. Ferner kann die Rolle mit einem Autoreifenähnlichen Profil ausgestattet sein. Es kann auch wenigstens eine Rolle aus mehreren Einzelrollen zusammengesetzt sein.

Um eine gleichmäßige Belastung durch die Transportkörper zu erreichen, kann eine Vorrichtung bereitgestellt werden, welche ein so genanntes "Load Balancing" durch Verwinden bewirkt.

Grundsätzlich kann der Antrieb anstelle über Rollen auch über Spindeln, Ketten oder Seile realisiert sein. Außerdem kann anstelle eines reibschlüssigen Antriebs ein formschlüssiger Antrieb, z.B. über wenigstens einen Hydraulikzylinder, vorgesehen sein.

Weiter bevorzugt können die Transportkörper einzeln und/oder in Gruppen und/oder gemeinsam verfahrbar sein. Damit wird die Flexibilität des Systems weiter erhöht. Unter anderem ist es möglich, bei Steigungen weniger als alle Transportkörper gleichzeitig zu verfahren, um die nötige Leistung und den nötigen Energieaufwand gering zu halten. Die gemeinsame Verfahrbarkeit ermöglicht ein schnelles Be- und/oder Entladen. Die Einzelverfahrmöglichkeit erleichtert ein Umsortieren der Transportkörper und erhöht insgesamt die Flexibilität des Systems.

Die Transportkörper können nach einer weiteren Ausgestaltung der Erfindung mechanisch und/oder durch entsprechende Steuerung miteinander koppelbar sein. Dadurch können zwei oder mehr Transportkörper auf einfache Weise gemeinsam verfahren werden.

Nach einer weiteren Ausgestaltung der Erfindung sind die Transportkörper zum Transport gegenüber einer Transportbahn oder dem Förderfahrzeug verriegelbar. Hierdurch kann verhindert werden, dass sich die Transportkörper während der Fahrt von selbst bewegen. Eine Verriegelung kann z.B. durch verstellbare Bolzen am Wagen realisiert sein, welche in entsprechende Ausnehmungen des Transportkörpers eingreifen. Je nach Anwendung kann die Betätigung der Verriegelung automatisch oder ferngesteuert erfolgen. Es kann auch eine Überwachungsvorrichtung zum automatischen Feststellen des Verriegelungszustands vorgesehen sein.

Nach einer weiteren Ausgestaltung der Erfindung sind die Transportkörper mit einer maschinenlesbaren Codierung versehen. Dadurch kann der Be- und/oder Entladevorgang automatisiert werden. Auch ist nach einer weiteren Ausgestaltung der Erfindung eine Fernsteuerung der Beund/oder Entladung der Transportkörper und der Bewegung der Transportkörper möglich.

An den Transportkörpern können auch Datenträger angebracht sein, welche durch eine Schreib-/Lesevorrichtung am Förderfahrzeug beschrieben und ausgelesen werden können. Weiterhin kann ein Datenübermittlungssystem vorgesehen sein, welches einen Informationsaustausch zwischen verschiedenen Förderfahrzeugen und/oder dem Straßenbaufahrzeug ermöglicht. Die Informationen können sich z.B. auf den Inhalt der Transportkörper oder auf die Steuerung des Straßenbaufahrzeugs beziehen.

Weiterhin können Mittel zum Erfassen der Position der Transportkörper in Bezug auf die Transportbahn vorgesehen sein. Insbesondere können zur Erfassung der Position mechanische, optische, magnetische und/oder induktive Detektoren an den Transportbahnen oder an anderer Stelle an den Förderfahrzeugen angeordnet sein. Eine derartige Positionserfassung kann z.B. ein Verriegeln der Transportkörper wie vorstehend beschrieben erleichtern.

Gemäß einer weiteren Ausführungsform der Erfindung ist eine Warneinrichtung vorgesehen, welche einen Bediener des Systems auf herannahende, aus dem Rollbahnbetrieb resultierende Gefahren hinweist, vorzugsweise akustisch, optisch, sensorisch und/oder mechanisch.

Die Förderfahrzeuge können auch mit einer zusätzlichen Lade- und/oder Fördermöglichkeit für Güter wie Flüssigkeiten oder Gase ausgebildet sein, insbesondere miteinander koppelbare Rohrleitungen. Damit kann beispielsweise ein Straßenbaufahrzeug mit nötigem Wasser oder Brennstoff versorgt und/oder Abwasser entsorgt werden.

Eine weitere Ausgestaltung der Erfindung sieht vor, dass das wenigstens eine Straßenbaufahrzeug ebenfalls mindestens eine Transportbahn zum Verfahren von Transportkörpern längs des Straßenbaufahrzeugs aufweist, wobei die Transportbahn des Straßenbaufahrzeugs vorzugsweise so ausgebildet ist, dass sie an eine Transportbahn eines mit dem Straßenbaufahrzeug zusammengekoppelten Förderfahrzeugs anschließt. Die Transportbahn des Straßenbaufahrzeugs kann derart gestaltet sein, dass auf ihr Neumaterial für den Untergrund direkt einer Einbaueinrichtung zugeführt wird.

Ferner kann zum Durchführen von Arbeiten an der Straße oder am Untergrund für die Straße ein mehrere Straßenbaufahrzeuge umfassender Maschinenpark vorgesehen sein, wobei jedes der mehreren Straßenbaufahrzeuge mindestens eine Transportbahn aufweist. Bei einer solchen Ausgestaltung können z.B. alle zur Sanierung einer Fahrbahn erforderlichen Schritte durch eine gemeinsame Bauspitze in direkter Folge hintereinander ausgeführt werden. Insbesondere können der Abbruch der alten Fahrbahndecke, der Ausbau des alten Unterbaus, gegebenenfalls der Einbau von Entwässerungseinrichtungen, die Verdichtung des anstehenden Erdplanums, der Schichtaufbau des neuen Unterbaus mit dessen Verdichtung sowie der Aufbau der Deckschichten direkt hintereinander über die Breite der jeweiligen Fahrspur ausgeführt werden. Der hierfür vorgesehene Maschinenpark kann eigens für die Zwecke der auf einen Fahrstreifen beschränkten Fahrbahnsanierung entwickelt sein. Alternativ kann es sich bei dem Maschinenpark lediglich um eine angepasste Anordnung von gängigen Maschinen handeln.

Bei Bedarf kann bezogen auf eine Arbeitsrichtung beidseits des Straßenbaufahrzeugs oder der mehreren Straßenbaufahrzeuge jeweils wenigstens ein Förderfahrzeug derart angeordnet sein, dass dessen Transportbahn an die Transportbahn des Straßenbaufahrzeugs anschließt. Somit kann ein An- und Abtransport von Baumaterial und Werkzeug in beiden Richtungen erfolgen.

Eine weitere Ausgestaltung der Erfindung sieht vor, dass das System zwei Züge aus Förderfahrzeugen umfasst, die zusammenführbar sind, um ihre Transportkörper untereinander auszutauschen. Ein solches System kann z.B. zwei separate Einheiten umfassen, von denen eine stets am Straßenbaufahrzeug bzw. am Maschinenpark verbleibt und die andere zwischen der verbleibenden Einheit und einer Ver-/Entsorgungsstelle hin und her pendelt. Hierdurch ist es möglich, dass das Straßenbaufahrzeug bzw. der Maschinenpark ohne Unterbrechung mit Material ver- und entsorgt wird. Es ist somit ein unterbrechungsfreies Arbeiten möglich, sodass die Bauzeit besonders kurz gehalten werden kann. Prinzipiell könnte auch der gesamte Zug aus vorhandenen Förderfahrzeugen pendeln. In diesem Fall sollten die Arbeiten für die Zeit, an der die Förderfahrzeuge nicht an das Straßenbaufahrzeug bzw. den Maschinenpark angeschlossen sind, unterbrochen werden.

Einzelne Förderfahrzeuge oder Gruppen von Förderfahrzeugen können erfindungsgemäß auch mit Zusatzeinrichtungen für mehrere oder alle Förderfahrzeuge versehen sein, wie Stromversorgungseinrichtung, Umrichter, Bremseinrichtung und dergleichen. Die entsprechende Versorgung eines Zuges oder Teils hiervon kann dadurch auf kostengünstige Weise durch ein oder mehrere einzelne Förderfahrzeuge gewährleistet werden.

Nach einer bevorzugten Ausgestaltung der Erfindung sind zwei oder mehr Förderfahrzeuge starr miteinander koppelbar. Dadurch ist es möglich, auf stoßdämpfende Einrichtungen zwischen den Förderfahrzeugen zu verzichten. Die Förderfahrzeuge können dadurch auch besonders eng miteinander gekoppelt werden, wodurch die Gesamtlänge des Zuges aus Förderfahrzeugen geringer gehalten werden kann.

Die einzelnen Förderfahrzeuge werden bevorzugt möglichst kurz ausgeführt, um in einer Kurve den Knickwinkel gering zu halten. Vorzugsweise kommen als Förderfahrzeuge daher zweiachsige Anhänger zum Einsatz. Wenigstens ein Förderfahrzeug kann derart gestaltet sein, dass die Transportkörper von einer oberen auf eine untere Transportebene oder umgekehrt wechseln können. Hierbei wird vorzugsweise die zum Anheben des Transportkörpers benötigte Energie zwischengespeichert, um so die Belastung der Energieversorgung zu minimieren und/oder den Hubvorgang zu beschleunigen. Ferner kann die beim Absenken des Transportkörpers frei werdende potentielle Energie zurückgewonnen und bei Bedarf für andere Aufgaben zur Verfügung gestellt werden. Die Zwischenspeicherung der Energie kann mechanisch, elektrisch, pneumatisch, hydraulisch oder chemisch erfolgen. Sofern die Energiespeicherung auf pneumatischem Weg erfolgt, kann die Kraft-Weg-Kennlinie des pneumatischen Speichers mit einem Getriebe an die für den Hub benötigte Kennlinie angepasst werden. Dadurch kann der Energieinhalt des Speichers vollständig, d.h. ohne Drosselverluste, genutzt werden. Außerdem kann die potentielle Energie des Transportkörpers beim Wechsel von der oberen auf die untere Transportebene vollständig in den pneumatischen Speicher transferiert werden.

Eine Vorrichtung zum vorübergehenden Entfernen eines Abschnitts der oberen Rollbahn kann ein Passieren des Transportkörpers auf die untere Rollbahn ermöglichen. Die untere Rollbahn ist hierbei auch dann benutzbar, wenn der Abschnitt der oberen Rollbahn entfernt ist. Alternativ kann auch ein Abschnitt der oberen Rollbahn mitsamt dem Transportkörper abgesenkt werden, um diesen auf die untere Rollbahn zu transferieren. Diese Ausgestaltung ermöglicht einen besonders einfachen Aufbau.

Die Transportkörper können auf den Transportbahnen zum Be- und/oder Entladen von Lastkraftwagen oder zum Umsortieren jeweils in beide oder in entgegengesetzte Richtungen verfahren werden. Damit kann das Be- und/oder Entladen bzw. das Umsortieren besonders schnell vonstattengehen.

Durch die Verwendung von Transportkörpern können zudem unterschiedliche Materialien gleichzeitig zu- und/oder abgeführt werden, was bei Verwendung von Lastkraftwagen nur sehr eingeschränkt möglich ist.

Besonders bevorzugt umfasst das erfindungsgemäße System zwei Züge mit Förderfahrzeugen, die zusammenführbar sind, um ihre Transportkörper untereinander auszutauschen. Die Stillstandszeiten von Straßenbaufahrzeugen können dadurch sehr gering gehalten werden, da die Transportkörper innerhalb weniger Minuten zwischen einem abgearbeiteten und einem nicht abgearbeiteten Zug aus Förderfahrzeugen ausgetauscht werden können. Nach Austausch der Transportkörper kann der zweite Zug vom ersten Zug, welcher sich am Straßenbaufahrzeug befindet, weggefahren und an beliebiger Stelle entleert und/oder beladen werden. Es ist dadurch nicht erforderlich, in unmittelbarer Nähe des Straßenbaufahrzeuges oder des Maschinenparks Lagerstätten vorzusehen.

Die erfindungsgemäßen Förderfahrzeuge können offen ausgebildet sein oder ein Dach und/oder Seitenwände aufweisen. Bei Vorsehen eines Daches sind insbesondere offene Transportkörper gegen Witterungseinflüsse geschützt. Durch Seitenwände können Witterungseinflüsse weiter ferngehalten werden.

Besonders bevorzugt ist außerdem die Ausgestaltung der Förderfahrzeuge als Zweiachsanhänger. Diese sind dadurch besonders leicht und kostengünstig. Damit können die erfindungsgemäßen Förderfahrzeuge auch einfach und kostengünstig auf dem Land und auf dem Wasser transportiert werden.

Das Förderfahrzeug kann außerdem mit einem Fahrantrieb ausgestattet sein. Ein Zugfahrzeug kann dadurch entbehrlich sein.

Ein Ausführungsbeispiel der Erfindung ist in der Zeichnung dargestellt und wird nachfolgend beschrieben. Es zeigen, jeweils in schematischer Darstellung,
- Fig. 1: ein erfindungsgemäßes Förderfahrzeug und
- Fig. 2: zwei zusammengestellte Züge aus mehreren erfindungsgemäßen Förderfahrzeugen.

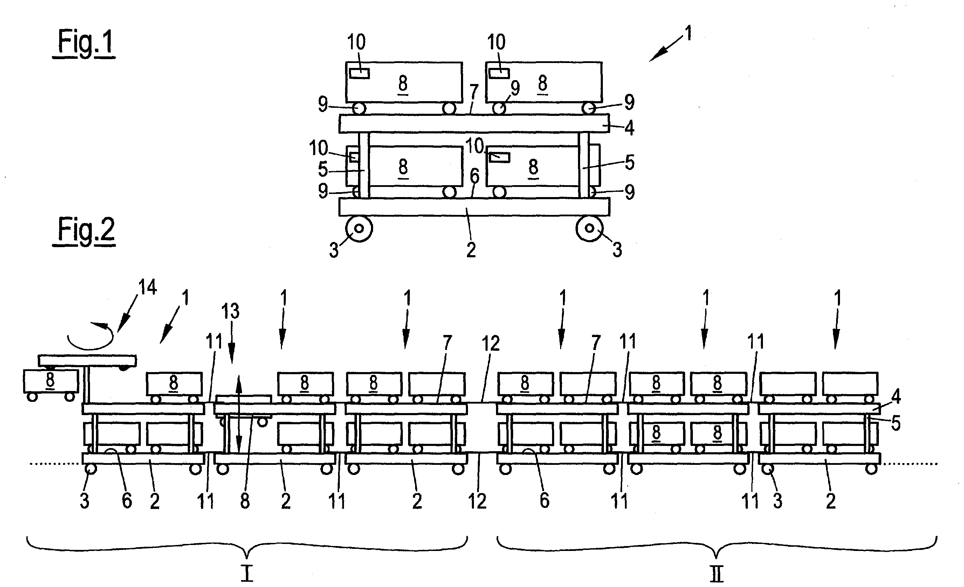

Das in Fig. 1 dargestellte Förderfahrzeug 1 umfasst einen unteren Rahmen 2 mit Rädern 3. Des Weiteren ist ein oberer Rahmen 4 vorgesehen, der über vertikale Streben 5 mit dem unteren Rahmen 2 verbunden ist. Auf dem unteren Rahmen 2 und dem oberen Rahmen 4 ist jeweils eine Transportbahn 6, 7 ausgebildet, auf welcher Transportkörper 8 verfahrbar sind. Bei den Transportkörpern 8 kann es sich um geschlossene Boxen, offene Transportkörper, wie Behälter oder Palletten, oder um Maschinen handeln, die auf ihrer Unterseite mit Rädern 9 versehen sind, die auf der Transportbahn 6 bzw. der Transportbahn 7 abrollen.

Die Transportkörper 8 können auf den Transportbahn 6, 7 automatisch verfahrbar sein. Hierfür sind die Transportkörper 8 mit einer maschinenlesbaren Codierung 10 versehen. Das Verfahren kann dabei auch ferngesteuert erfolgen.

Wie in Fig. 2 dargestellt, sind jeweils mehrere Förderfahrzeuge 1 zu einem Zug I, II zusammengestellt. Die unteren Transportbahnen 6 und die oberen Transportbahnen 7 der Förderfahrzeuge 1 schließen jeweils absatzlos aneinander an und verlaufen horizontal. Hierfür sind zwischen den Förderfahrzeugen 1 Transportbahnverbindungen 11 vorgesehen. Derartige Transportbahnverbindungen 12 können auch zwischen zwei Zügen I, II vorgesehen sein. Auf diese Weise können die Transportkörper 8 auch zwischen zwei Zügen ausgetauscht werden. Bei Verwendung von Transportbahnen 6, 7 mit Rollen oder dergleichen und Transportkörpern ohne Räder 9 kann auf solche Verbindungen 11, 12 auch verzichtet werden.

Wie ebenfalls in Fig. 2 dargestellt ist, kann mindestens eines der Förderfahrzeuge 1 mit einer Wechseleinrichtung 13 zwischen den Transportbahnen 6, 7 ausgestattet sein. Dadurch können die Transportkörper 8 von der einen Transportbahn 6 bzw. 7 zu der anderen Transportbahn 7 bzw. 6 gebracht werden. Dies ermöglicht eine Umsortierung oder eine Zwischenlagerung von Transportkörpern 8. Die Transportkörper können auf beiden Transportbahnen 6, 7 bevorzugt in beiden Richtungen verfahren werden. Ebenfalls in Fig. 2 dargestellt ist, dass ein an einem Ende eines Zuges I, II angeordnetes Förderfahrzeug 1 mit einer automatischen Be- und/oder Entladeeinrichtung 14 ausgerüstet sein kann. Diese Be- und/oder Entladeeinrichtung ermöglicht einen Materialaustausch zwischen den Transportkörpern 8 und einem hier nicht dargestellten Straßenbaufahrzeug oder einen Austausch von Transportkörpern 8 zwischen dem Förderfahrzeug 1 und einer Lagerstelle.

Ebenfalls nicht dargestellt ist die Möglichkeit, mindestens eines der Förderfahrzeuge 1 mit einer seitlichen Be- und Entlademöglichkeit für die Transportkörper 8 zu versehen. Die Transportkörper 8 können dadurch von dem Förderfahrzeug 1 entnommen und gegen andere Transportkörper ausgetauscht werden, beispielsweise um mit Abraum gefüllte Transportkörper 8 gegen leere Transportkörper auszutauschen oder um leere Transportkörper 8 gegen Transportkörper mit neuem Material auszutauschen.

Zum Sanieren einer Fahrbahn werden zwei Züge I, II aus Förderfahrzeugen 1 bereitgestellt, wobei die unteren Transportbahnen 6 der Förderfahrzeuge 1 mit gefüllten Transportkörpern 8 bestückt sind. Konkret enthalten die auf den unteren Transportbahnen 6 befindlichen Transportkörper 8 sämtliche für die Sanierung der Fahrbahn benötigten Baustoffe wie Sand, Kies, Asphalt und Entwässerungsbauteile, jeweils getrennt in einzelnen Transportkörpern 8. Die Transportkörper 8 sind hierbei vorzugsweise in der Reihenfolge sortiert, in welcher sie an der Bauspitze benötigt werden. Die oberen Transportbahnen 7 der Förderfahrzeuge 1 sind bevorzugt mit leeren Transportkörpern 8 bestückt.

An den im Bild rechten Zug II schließt sich, gegebenenfalls unter Zwischenschaltung weiterer Züge aus Förderfahrzeugen 1, ein Maschinenpark aus Straßenbaufahrzeugen zum Durchführen der Fahrbahnsanierungsarbeiten an, welcher in Fig. 2 nicht dargestellt ist.

Falls der Maschinenpark einen bestimmten Baustoff benötigt, wird der entsprechende Transportkörper 8 auf den unteren Transportbahnen 6 an die entsprechende Stelle gefahren und dort z.B. entleert. Zu diesem Zweck sind vorzugsweise alle Straßenbaufahrzeuge des Maschinenparks mit oberen und unteren Transportbahnen ausgestattet, die an entsprechende Transportbahnen des Zuges II anschließen, sodass die Transportkörper 8 von dem Zug II an den Maschinenpark und umgekehrt übergeben werden können.

Ein entleerter Transportkörper 8 kann über entsprechende Transportbahnen zu einem Aushubmodul des Maschinenparks verfahren werden, um dort Altstoffe wie Erdaushub aufzunehmen. Nach einer solchen Füllung wird der entsprechende Transportkörper 8 auf die oberen Transportbahnen 7 des Zuges I verfahren und dort zwischengelagert. Die Neustoffe werden so Transportkörper für Transportkörper im Maschinenpark verbaut, während im Gegenzug immer weitere entleerte Transportkörper 8 mit Altstoffen gefüllt werden.

Wenn auf diese Weise der Inhalt aller Transportkörper 8 ausgetauscht wurde, befinden sich auf den oberen Transportbahnen 7 des Zuges II mit Altstoffen gefüllte Transportkörper 8, während die unteren Transportbahnen 6 des Zuges II leer sind.

Nun werden die mit Altstoffen gefüllten Transportkörper 8 auf die oberen Transportbahnen 7 des Zuges I verfahren. Ebenso werden mit Neustoffen befüllte Transportkörper 8 auf den unteren Transportbahnen 6 von dem Zug I auf den Zug II verfahren. Der Zug II bildet eine Pendelfahrzeuggruppe und wird periodisch von dem Zug II abgekoppelt, um zu einer nicht dargestellten Ver- und Entsorgungsbrücke zu fahren.

Diese Ver- und Entsorgungsbrücke führt z.B. vom Mittelstreifen der Autobahn über die zu sanierende Richtungsfahrbahn bis zu einer Baustelleneinrichtungsfläche. Sie kann bei Bedarf auch über beide Richtungsfahrbahnen führen. Mittels der Ver- und Entsorgungsbrücke werden die Transportkörper 8 von dem Zug I über die Autobahn zur Baustelleneinrichtungsfläche und zurück transportiert. Zur Beschleunigung des Lade- und Entladevorgangs können auch zwei nebeneinanderstehende Brücken vorgesehen sein, die z.B. jeweils auf eine der Transportbahnen 6, 7 des Zuges I zugreifen können, um sowohl die oberen Transportbahnen 7 als auch die unteren Transportbahnen 6 gleichzeitig zu ver- und entsorgen. Im Bereich der Baustelleneinrichtungsfläche werden die Altstoffe einem Recycling unterzogen oder auf Lastkraftwagen verladen und entsorgt. Sobald ein Transportkörper 8 mit Altstoffen vom Zug I abgehoben wurde, wird ein nachfolgender mit Altstoffen gefüllter Transportkörper 8 auf diese Position verfahren.

Auf analoge Weise werden mit Neustoffen befüllte Transportkörper 8 von der Baustelleneinrichtungsfläche zum Zug I transportiert. Sobald ein Transportkörper 8 auf dem Zug I abgesetzt wurde, wird er auf der unteren Transportbahn 6 verfahren, um Platz für einen nachfolgenden Transportkörper 8 zu schaffen.

Am Ende des Lade- und Entladevorgangs ist der Zug I wieder voll mit solchen Transportkörpern 8, die mit Neustoffen befüllt sind. Die obere Transportbahn 7 ist hingegen leer. Der Zug I fährt nun von der Ver- und Entsorgungsbrücke zum Zug II, wird mit diesem zusammengekoppelt und tauscht mit ihm über die Transportbahnen 6, 7 Alt- und Neustoffe aus.

Bei geeigneter Abstimmung der einzelnen Schritte entspricht die Zeitdauer, die für die Verarbeitung der Stoffe des Zuges II benötigt wird, derjenigen Zeitdauer, die zum Pendeln und zum Austausch der Stoffe an der Ver- und Entsorgungsbrücke benötigt wird. Somit ist gewährleistet, dass mit minimalem Aufwand und unter Verwendung vergleichsweise kurzer Züge I, II gerade keine Wartezeiten an der Bauspitze entstehen.

Falls die Transportbahnen auf allen Modulen des Maschinenparks durchgängig vorhanden sind, kann die Ver- und Entsorgung von beiden Seiten aus erfolgen, sofern der neu geschaffene Straßenbelag die durch die Förderfahrzeuge 1 entstehenden Belastungen schadensfrei tragen kann.

### Bezugszeichenliste

- 1: Förderfahrzeug
- 2: unterer Rahmen
- 3: Rad
- 4: oberer Rahmen
- 5: vertikale Strebe
- 6: untere Transportbahn
- 7: obere Transportbahn
- 8: Transportkörper
- 9: Rad
- 10: Codierung
- 11: Transportbahnverbindung
- 12: Transportbahnverbindung
- 13: Transportbahnwechseleinrichtung
- 14: automatische Be- und Entladeeinrichtung

- I: erster Zug
- II: zweiter Zug

## Patentansprüche

1. System zum Neuherstellen, Sanieren oder Rückbauen einer Straße, insbesondere einer Autobahn, mit wenigstens einem Straßenbaufahrzeug zum Durchführen von Arbeiten an der Straße oder am Untergrund für die Straße sowie
Mitteln zum An- und Abtransport von Gegenständen zu bzw. von dem Straßenbaufahrzeug, mit mehreren zusammenkoppelbaren Förderfahrzeugen (1), die jeweils mindestens eine Transportbahn (6, 7) aufweisen, auf welcher die Gegenstände längs der Förderfahrzeuge (1) verfahrbar sind und die so ausgebildet ist, dass die Transportbahnen (6, 7) zusammengekoppelter Förderfahrzeuge (1) aneinander anschließen,
**dadurch gekennzeichnet, dass**
Transportkörper (8) für die Gegenstände vorgesehen sind, die zu einer Verfahrbarkeit längs aneinander anschließender Transportbahnen (6, 7) von Förderfahrzeug (1) zu Förderfahrzeug (1) ausgebildet sind, wobei wenigstens ein Transportkörper (8) als offener oder geschlossener Behälter für die Gegenstände oder als plattenartiger Träger für die Gegenstände ausgebildet ist.

2. System nach Anspruch 1,
**dadurch gekennzeichnet, dass**
die Transportkörper (8) ohne zusätzliche Verlademittel wie Kräne von Förderfahrzeug (1) zu Förderfahrzeug (1) verfahrbar sind.

3. System nach Anspruch 1 oder 2,
**dadurch gekennzeichnet, dass** die Transportkörper (8) direkt auf den Transportbahnen (6, 7) von Förderfahrzeug (1) zu Förderfahrzeug (1) verfahrbar sind und/oder dass
die Transportbahnen (6, 7) zumindest im Wesentlichen horizontal verlaufen und/oder absatzlos aneinander anschließen.

4. System nach einem der vorhergehenden Ansprüche,
**dadurch gekennzeichnet, dass** das Straßenbaufahrzeug und/oder die Förderfahrzeuge (1) jeweils mindestens ein Radfahrwerk aufweist/aufweisen oder dass das Straßenbaufahrzeug und/oder die Förderfahrzeuge (1) jeweils ein Schienenfahrwerk aufweist/aufweisen.

5. System nach einem der vorhergehenden Ansprüche,
**gekennzeichnet durch**
eine Transportbrücke, auf welcher die Transportkörper (8) quer zu dem Verlauf der Straße verfahrbar sind, wobei die Transportbrücke zumindest eine Fahrspur der Straße überspannt und in der Lage ist, Transportkörper (8) von einem unter der Transportbrücke befindlichen Förderfahrzeug (1) aufzunehmen und/oder an ein unter der Transportbrücke befindliches Förderfahrzeug (1) abzugeben, und/oder dass
die Transportkörper (8) hinsichtlich ihrer äußeren Abmessungen, ihres Gewichts und/oder ihrer Oberflächenbeschaffenheit für den Transport auf den Transportbahnen (6, 7) angepasst sind oder umgekehrt.

6. System nach einem der vorhergehenden Ansprüche,
**dadurch gekennzeichnet, dass** mindestens ein Förderfahrzeug (1) einen Antrieb zum Verfahren der Transportkörper (8) längs der Transportbahnen (6, 7) aufweist und/oder dass mindestens ein Teil der Transportkörper (8) mit einem Antrieb, insbesondere mit einem führerlosen Antrieb, versehen ist, und/oder dass
das System zwei Züge (I, II) aus Förderfahrzeugen (1) umfasst, die zusammenführbar sind, um ihre Transportkörper (8) untereinander auszutauschen, und/oder dass
mindestens ein Teil der Förderfahrzeuge (1), insbesondere alle Förderfahrzeuge, mindestens zwei zueinander parallele Transportbahnen (6, 7) aufweist, die bei zusammengekoppelten Förderfahrzeugen (1) jeweils aneinander anschließen und längs denen die Transportkörper (8) verfahrbar sind, bevorzugt jeweils in beide Richtungen oder in entgegengesetzte Richtungen, wobei, bevorzugt,
zwei Transportbahnen nebeneinander oder übereinander auf den Förderfahrzeugen (1) verlaufen, und/oder dass mindestens ein Förderfahrzeug (1) eine Vorrichtung zum zeitweisen Entfernen mindestens eines Transportkörpers (8) aus einer Transportbahn (6, 7) oder zum Wechseln von Transportkörpern (8) zwischen zwei Transportbahnen (6, 7) aufweist, wobei bevorzugt eine Steuervorrichtung vorgesehen ist, durch welche die Transportkörper (8) auf den Transportbahnen (6, 7) sortierbar sind.

7. System nach einem der vorhergehenden Ansprüche,
**dadurch gekennzeichnet, dass**
das wenigstens eine Straßenbaufahrzeug mindestens eine Transportbahn (6, 7) zum Verfahren von Transportkörpern (8) längs des Straßenbaufahrzeugs aufweist, wobei die Transportbahn (6, 7) des Straßenbaufahrzeugs vorzugsweise so ausgebildet ist, dass sie an eine Transportbahn (6, 7) eines mit dem Straßenbaufahrzeug zusammengekoppelten Förderfahrzeugs (1) anschließt, insbesondere wobei
zum Durchführen von Arbeiten an der Straße oder am Untergrund für die Straße ein mehrere Straßenbaufahrzeuge umfassender Maschinenpark vorgesehen ist, wobei jedes der mehreren Straßenbaufahrzeuge mindestens eine Transportbahn (6, 7) aufweist, wobei, bevorzugt,
bezogen auf eine Arbeitsrichtung beidseits des Straßenbaufahrzeugs oder der mehreren Straßenbaufahrzeuge jeweils wenigstens ein Förderfahrzeug (1) derart angeordnet ist, dass dessen Transportbahn (6, 7) an die Transportbahn (6, 7) des Straßenbaufahrzeugs anschließt.

8. Verfahren zum Neuherstellen, Sanieren oder Rückbauen einer Straße, insbesondere einer Autobahn, wobei mittels wenigstens eines Straßenbaufahrzeugs Arbeiten an der Straße oder am Untergrund für die Straße durchgeführt und hierbei Gegenstände zu bzw. von dem Straßenbaufahrzeug transportiert werden,
wobei die Gegenstände mittels mehrerer zusammenkoppelbarer Förderfahrzeuge (1) transportiert werden, wobei die Förderfahrzeuge (1) jeweils mindestens eine Transportbahn (6, 7) aufweisen, auf welcher die Gegenstände längs der Förderfahrzeuge (1) verfahrbar sind und die so ausgebildet ist, dass die Transportbahnen (6, 7) zusammengekoppelter Förderfahrzeuge (1) aneinander anschließen, **dadurch gekennzeichnet, dass**
die Gegenstände auf den Förderfahrzeugen (1) mittels Transportkörpern (8) transportiert werden, wobei wenigstens ein Transportkörper (8) als offener oder geschlossener Behälter für die Gegenstände oder als plattenartiger Träger für die Gegenstände ausgebildet ist und wobei die Transportkörper (8) auf den Förderfahrzeugen (1) längs aneinander anschließender, bevorzugt zumindest im Wesentlichen horizontal verlaufender und/oder absatzlos aneinander anschließender Transportbahnen (6, 7) von Förderfahrzeug (1) zu Förderfahrzeug (1) verfahren werden, insbesondere direkt auf den Transportbahnen (6, 7) und/oder insbesondere ohne zusätzliche Verlademittel wie Kräne.

9. Verfahren nach Anspruch 8,
**dadurch gekennzeichnet, dass** die Transportkörper (8) längs mindestens zwei zueinander parallelen Transportbahnen (6, 7) verfahren werden, die auf mindestens einem Teil der Förderfahrzeuge (1), insbesondere auf allen Förderfahrzeugen, vorgesehen sind, wobei die Transportkörper (8) auf den Transportbahnen (6, 7) bevorzugt jeweils in beide oder in entgegengesetzte Richtungen verfahren werden und/oder dass Transportkörper (8) durch zeitweises Entfernen von einer Transportbahn (6, 7) und/oder Wechsel zwischen den Transportbahnen (6, 7) auf den Förderfahrzeugen (1) umsortiert werden und/oder dass
die Transportkörper (8) einzeln, in Gruppen oder alle gemeinsam verfahren werden und/oder dass
die Transportkörper (8) zwischen einem ersten Zug (I) aus Förderfahrzeugen (1) und einem zweiten Zug (II) aus Förderfahrzeugen (1) ausgetauscht werden, wobei der erste Zug (I) aus Förderfahrzeugen (1) während der durchzuführenden Arbeiten zusammen mit dem Straßenbaufahrzeug ein Baumodul bildet und der zweite Zug (II) aus Förderfahrzeugen (1) während der durchzuführenden Arbeiten zwischen dem ersten Zug (I) aus Förderfahrzeugen (1) und einer Ver- und Entsorgungseinrichtung, insbesondere Lagerplatz, hin und her pendelt.

10. Verfahren nach Anspruch 8 oder 9,
**dadurch gekennzeichnet, dass** ein Zu- und Abführen von Material zu bzw. von einem Straßenbaufahrzeug gleichzeitig erfolgt und/oder dass
ein Zu- und Abführen von Material zu bzw. von einem Straßenbaufahrzeug auf derselben Seite des Straßenbaufahrzeugs erfolgt und/oder dass
unterschiedliche Materialien zu bzw. von einem Straßenbaufahrzeug gleichzeitig zu- und/oder abgeführt werden.

11. Verfahren nach einem der Ansprüche 8 bis 10,
**dadurch gekennzeichnet, dass**
das Material auf einer Transportbahn (6 oder 7) zu einem Straßenbaufahrzeug antransportiert und auf einer anderen Transportbahn (6 oder 7) von einem Straßenbaufahrzeug abtransportiert wird oder dass die Transportkörper (8) auf der einen Transportbahn (6 oder 7) voll und auf der anderen Transportbahn (6 oder 7) leer verfahren werden und/oder dass
Transportkörper (8) zum Austausch seitlich von den Förderfahrzeugen (1) entnommen werden und/oder dass
nach einem Ver- und/oder Entsorgen eines Straßenbaufahrzeugs mit einem ersten Zug (I) mit Förderfahrzeugen (1) ein zweiter Zug (II) mit Förderfahrzeugen (1) herangefahren wird und dass dann die Transportkörper (8) des ersten Zuges (I) gegen die Transportkörper (8) des zweiten Zuges (II) durch Verfahren der Transportkörper (8) längs der Transportbahnen (6, 7) ausgetauscht werden.

12. Förderfahrzeug zur Verwendung in einem System oder einem Verfahren nach einem der vorhergehenden Ansprüche mit einem Bodenfahrwerk und mindestens einer Transportbahn (6, 7), auf welcher Gegenstände längs des Förderfahrzeugs (1) verfahrbar sind, **dadurch gekennzeichnet, dass**
ein Antrieb zum Verfahren von Transportkörpern (8) nach dem System von Ansprüchen 1-3, 5-7 oder dem Verfahren von Ansprüchen 8, 9 längs der Transportbahnen (6, 7) vorgesehen ist.

13. Förderfahrzeug nach Anspruch 12,
**dadurch gekennzeichnet, dass**
ein Antrieb seitlich der Transportbahn (6, 7) vorgesehen ist und/oder dass ein Antrieb in der Transportbahn (6, 7) vorgesehen ist und/oder dass
mindestens zwei zueinander parallele, insbesondere neben- und/oder übereinander angeordnete Transportbahnen (6, 7) vorgesehen sind und/oder dass
eine Vorrichtung zum zeitweisen Entfernen eines Transportkörpers (8) aus einer Transportbahn (6, 7) und/oder eine Vorrichtung zum Wechseln eines Transportkörpers (8) zwischen zwei Transportbahnen (6, 7) vorgesehen ist und/oder dass
die Transportbahnen (6, 7) durch Fahrbahnen, Rollenbahnen, Gleitbahnen, Schwebebahnen, Hängebahnen, Förderbänder, Förderkettenbahnen oder dergleichen gebildet sind, und/oder dass keine zusätzlichen Verlademittel wie Kräne zum Verfahren der Transportkörper (8) vorgesehen sind.

14. Förderfahrzeug nach Anspruch 12 oder 13,
**dadurch gekennzeichnet, dass**
Mittel zum Verriegeln von Transportkörpern (8) gegenüber einer Transportbahn (6, 7) oder dem Förderfahrzeug (1) vorgesehen sind und/oder dass
eine zusätzliche Lade- und/oder Fördermöglichkeit für Waren wie Flüssigkeiten oder Gase vorgesehen ist und/oder dass Zusatzeinrichtungen wie Stromversorgung, Umrichter, Bremseinrichtung vorgesehen sind, die auch anderen Förderfahrzeugen (1) dienen können und/oder dass
eine Einrichtung zum starren Koppeln des Förderfahrzeugs (1) mit einem anderen Förderfahrzeug (1) vorgesehen ist, und/oder dass die Transportbahnen (6, 7) zumindest im Wesentlichen horizontal verlaufen und/oder zum absatzlosen aneinander Anschließen mit einer entsprechenden Transportbahn (6, 7) eines weiteren derartigen Förderfahrzeugs (1) ausgebildet sind.

15. Förderfahrzeug nach einem der Ansprüche 12 bis 14,
**dadurch gekennzeichnet, dass** eine automatische Be- und/oder Entladeeinrichtung (14) zum Güteraustausch mit einem Straßenbaufahrzeug oder einer Be- und/oder Entladestelle vorgesehen ist und/oder dass eine Einrichtung zum Empfang von Fernsteuersignalen vorgesehen ist und/oder dass
eine seitliche Entnahmemöglichkeit für Transportkörper (8) vorgesehen ist oder eine Einrichtung zum Austausch längs der Fahrtrichtung des Förderfahrzeugs (1) von Transportkörpern (8) mit auf dem Boden gelagerten Transportkörpern (8), und/oder dass die Transportbahnen (6, 7) und der Antrieb zum Verfahren von einzelnen Transportkörpern (8) ausgebildet sind, welche jeweils ein Gewicht von wenigstens 500 kg, vorzugsweise wenigstens 1000 kg, aufweisen.

## Claims

1. A system for the new construction, for the repair or for the demolition of a road, in particular of a highway, comprising at least one road construction vehicle for carrying out work on the road or on the subgrade for the road; and
means for transporting objects to and from the road construction vehicle using a plurality of conveyor vehicles (1) which can be coupled together and which each have at least one transport path (6, 7) on which the objects can be traveled along the conveyor vehicles (1) and which is configured such that the transport paths (6, 7) of conveyor vehicles (1) which are coupled together adjoin one another,
**characterized in that**
transport bodies (8) are provided for the objects and are configured for a travelability along mutually adjoining transport paths (6, 7) from conveyor vehicle (1) to conveyor vehicle (1), with at least one transport body (8) being configured as an open or closed container for the objects or as a plate-like carrier for the objects.

2. A system in accordance with claim 1,
**characterized in that**
the transport bodies (8) are travelable from conveyor vehicle (1) to conveyor vehicle (1) without additional loading means such as cranes.

3. A system in accordance with claim 1 or claim 2,
**characterized in that**
the transport bodies (8) are travelable directly on the transport paths (6, 7) from conveyor vehicle (1) to conveyor vehicle (1); and/or in that
the transport paths (6, 7) extend at least substantially horizontally and/or adjoin one another without a step.

4. A system in accordance with any one of the preceding claims,
**characterized in that**
the road construction vehicle and/or the conveyor vehicles (1) each has/have at least one wheeled base; or **in that** the road construction vehicle and/or the conveyor vehicles (1) each has/have a rail-mounted base.

5. A system in accordance with any one of the preceding claims,
**characterized by**
a transport bridge on which the transport bodies (8) are travelable transversely to the course of the road, with the transport bridge spanning at least one lane of the road and being able to receive transport bodies (8) from a conveyor vehicle (1) located beneath the transport bridge and/or to dispense them to a conveyor vehicle (1) located beneath the transport bridge; and/or in that the transport bodies (8) are adapted with respect to their outer dimensions, their weight and/or their surface properties for the transport on the transport paths (6, 7) or vice versa.

6. A system in accordance with any one of the preceding claims,
**characterized in that**
at least one conveyor vehicle (1) has a drive for traveling the transport bodies (8) along the transport paths (6, 7); and/or **in that** at least some of the transport bodies (8) are provided with a drive, in particular with a driverless drive; and/or **in that** the system comprises two trains (I, II) of conveyor vehicles (1) which can be combined to exchange their transport bodies (8) between one another; and/or **in that**
at least some of the conveyor vehicles (1), in particular all of the conveyor vehicles, have at least two mutually parallel transport paths (6, 7) which, with coupled together conveyor vehicles (1), each adjoin one another and along which the transport bodies (8) can be traveled, preferably in both directions or in opposite directions respectively, with, preferably,
two transport paths extending next to one another or above another on the conveyor vehicles (1); and/or **in that** at least one conveyor vehicle (1) has an apparatus for a temporary removal of at least one transport body (8) from a transport path (6, 7) or for exchanging transport bodies (8) between two transport paths (6, 7), with, preferably
a control apparatus being provided by which the transport bodies (8) can be sorted on the transport paths (6, 7).

7. A system in accordance with any one of the preceding claims,
**characterized in that**
the at least one road construction vehicle has at least one transport path (6, 7) for traveling transport bodies (8) along the road construction vehicle, with the transport path (6, 7) of the road construction vehicle preferably being configured such that it adjoins a transport path (6, 7) of a conveyor vehicle (1) coupled together with the road construction vehicle, in particular with machinery comprising a plurality of road construction vehicles being provided for carrying out work on the road or on the subgrade for the road, with each of the plurality of road construction vehicles having at least one transport path (6, 7), with, preferably,
at least one conveyor vehicle (1) being respectively arranged at both sides of the road construction vehicle or of the plurality of road construction vehicles with respect to a direction of work such that the transport path (6, 7) of said conveyor vehicle (1) adjoins the transport path (6, 7) of the road construction vehicle.

8. A method for the new construction, for the repair or for the demolition of a road, in particular of a highway, with work being carried out on the road or on the subgrade for the road by means of at least one road construction vehicle and objects being transported to and from the road construction vehicle in so doing, wherein the objects are transported by means of a plurality of conveyor vehicles (1) which can be coupled together; and wherein the conveyor vehicles (1) each have at least one transport path (6, 7) on which the objects can be traveled along the conveyor vehicles (1) and which is configured such that the transport paths (6, 7) of conveyor vehicles (1) which are coupled together adjoin one another,
**characterized in that**
the objects are transported on the conveyor vehicles (1) by means of transport bodies (8), with at least one transport body (8) being configured as an open or closed container for the objects or as a plate-like carrier for the objects, and with the transport bodies (8) being traveled on the conveyor vehicles (1) from conveyor vehicle (1) to conveyor vehicle (1) along mutually adjoining transport paths (6, 7) which preferably extend at least substantially horizontally and/or adjoin one another without a step, said transport bodies (8) in particular being traveled directly on the transport paths (6, 7) and/or in particular without additional loading means such as cranes.

9. A method in accordance with claim 8,
**characterized in that**
the transport bodies (8) are traveled along at least two mutually parallel transport paths (6, 7) which are provided on at least some of the conveyor vehicles (1), in particular on all of the conveyor vehicles, with the transport bodies (8) preferably being traveled on the transport paths (6, 7) in both directions or in opposite directions respectively; and/or **in that**
transport bodies (8) are resorted by a temporary removal from a transport path (6, 7) and/or by an exchange between the transport paths (6, 7) on the conveyor vehicles (1); and/or **in that** the transport bodies (8) are traveled individually, in groups or all together; and/or **in that**
the transport bodies (8) are exchanged between a first train (I) of conveyor vehicles (1) and a second train (II) of conveyor vehicles (1), with the first train (I) of conveyor vehicles (1) forming a construction module together with the road construction vehicle during the work to be carried out and the second train (II) of conveyor vehicles (1) commuting to and fro between the first train (I) of conveyor vehicles (1) and a supply and disposal device, in particular a storage space, during the work to be carried out.

10. A method in accordance with claim 8 or claim 9,
**characterized in that**
a supply and removal of material to and from a road construction vehicle take place simultaneously; and/or **in that** a supply and removal of material to and from a road construction vehicle take place on the same side of the work vehicle; and/or **in that**
different materials are supplied to and/or removed from a road construction vehicle simultaneously.

11. A method in accordance with any one of the claims 8 to 10,
**characterized in that**
the material is transported to a road construction vehicle on one transport path (6 or 7) and is transported away from a road construction vehicle on another transport path (6 or 7); or **in that** the transport bodies (8) are traveled on the one transport path (6 or 7) while full and on the other transport path (6 or 7) while empty; and/or **in that**
transport bodies (8) are removed laterally from the conveyor vehicles (1) for the exchange; and/or **in that**
a second train (II) having conveyor vehicles (1) is traveled in after a supply and/or disposal of a road construction vehicle by a train (I) having conveyor vehicles (1); and **in that** the transport bodies (8) of the first train (I) are then exchanged with the transport bodies (8) of the second train (II) by traveling the transport bodies (8) along the transport paths (6, 7).

12. A conveyor vehicle for use in a system or in a method in accordance with any one of the preceding claims having a base and at least one transport path (6, 7) on which objects can be traveled along the conveyor vehicle (1),
**characterized in that**
a drive is provided for traveling transport bodies (8) in accordance with the system of claims 1-3, 5-7 or in accordance with the method of claims 8, 9 along the transport paths (6, 7).

13. A conveyor vehicle in accordance with claim 12,
**characterized in that**
a drive is provided at the side of the transport path (6, 7); and/or **in that** a drive is provided in the transport path (6, 7); and/or **in that** at least two mutually parallel transport paths (6, 7) are provided which are in particular arranged next to one another and/or above one another; and/or **in that**
an apparatus is provided for the temporary removal of a transport body (8) from a transport path (6, 7) and/or an apparatus is provided for exchanging a transport body (8) between two transport paths (6, 7); and/or **in that**
the transport paths (6, 7) are formed by tracks, roller tracks, slideways, suspended tracks, overhead tracks, conveyor belts, conveyor chain belts or the like; and/or **in that** no additional loading means such as cranes are provided for traveling the transport bodies (8).

14. A conveyor vehicle in accordance with claim 12 or claim 13,
**characterized in that**
means are provided for latching transport bodies (8) with respect to a transport path (6, 7) or with respect to the conveyor vehicle (1); and/or **in that**
an additional loading and/or conveying possibility is provided for goods such as liquids or gases; and/or **in that** additional devices such as a current supply, an inverter, a brake device are provided which can also serve other conveyor vehicles (1); and/or **in that**
a device is provided for a rigid coupling of the conveyor vehicle (1) to another conveyor vehicle (1); and/or **in that**
the transport paths (6, 7) extend at least substantially horizontally and/or are configured for a mutual adjoining without a step with a corresponding transport path (6, 7) of a further such conveyor vehicle (1).

15. A conveyor vehicle in accordance with any one of the claims 12 to 14,
**characterized in that**
an automatic loading and/or unloading device (14) is provided for the exchange of goods with a road construction vehicle or with a loading and/or unloading site; and/or **in that** a device is provided for receiving remote control signals; and/or **in that**
a lateral removal possibility for transport bodies (8) is provided or a device is provided for exchanging transport bodies (8) along the direction of travel of the conveyor vehicle (1) with transport bodies (8) supported on the ground; and/or **in that**
the transport paths (6, 7) and the drive are configured for traveling individual transport bodies (8) which each have a weight of at least 500 kg, preferably at least 1000 kg.

## Revendications

1. Système pour nouvellement construire, rénover ou démonter une route, en particulier une autoroute, comportant
au moins un véhicule de travaux routiers pour exécuter des travaux au niveau de la route ou du sous-sol de la route, et
des moyens pour livrer et évacuer des objets vers ou depuis le véhicule de travaux routiers, comprenant une pluralité de véhicules de convoyage (1) susceptibles d'être couplés ensemble, chacun ayant au moins une voie de transport (6, 7) sur laquelle les objets peuvent être déplacés le long des véhicules de convoyage (1) et qui est réalisée de telle sorte que les voies de transport (6, 7) de véhicules de convoyage (1) couplés ensemble se raccordent les unes aux autres,
**caractérisé en ce que**
il est prévu des corps de transport (8) pour les objets, qui sont réalisés pour être déplaçables le long de voies de transport (6, 7) raccordées les unes aux autres d'un véhicule de convoyage (1) à un autre véhicule de convoyage (1), au moins un corps de transport (8) étant réalisé comme un conteneur ouvert ou fermé pour les objets ou comme un support en forme de panneau pour les objets.

2. Système selon la revendication 1,
**caractérisé en ce que**
les corps de transport (8) sont déplaçables d'un véhicule de convoyage (1) à un autre véhicule de convoyage (1) sans moyens de chargement supplémentaires, tels que des grues.

3. Système selon la revendication 1 ou 2,
**caractérisé en ce que**
les corps de transport (8) sont déplaçables directement sur les voies de transport (6, 7) d'un véhicule de convoyage (1) à un autre véhicule de convoyage (1), et/ou **en ce que**
les voies de transport (6, 7) s'étendent au moins sensiblement horizontalement et/ou se raccordent les unes aux autres sans gradin.

4. Système selon l'une des revendications précédentes,
**caractérisé en ce que**
le véhicule de travaux routiers et/ou les véhicules de convoyage (1) comporte / comportent chacun un train de roulement sur roues,
et/ou **en ce que**
le véhicule de travaux routiers et/ou les véhicules de convoyage (1) comporte / comportent chacun un train de roulement sur rails.

5. Système selon l'une des revendications précédentes,
**caractérisé par**
un pont de transport sur lequel les corps de transport (8) sont déplaçables transversalement au tracé de la route, le pont de transport pontant au moins une chaussée de la route et étant apte à reprendre des corps de transport (8) depuis un véhicule de convoyage (1) situé au-dessous du pont de transport et/ou à les remettre à un véhicule de convoyage (1) situé au-dessous du pont de transport,
et/ou en ce que
quant à leurs dimensions extérieures, à leur poids et/ou à la nature de leur surface, les corps de transport (8) sont adaptés au transport sur les voies de transport (6, 7), ou inversement.

6. Système selon l'une des revendications précédentes,
**caractérisé en ce que**
au moins un véhicule de convoyage (1) comprend un entraînement pour déplacer les corps de transport (8) le long des voies de transport (6, 7), et/ou **en ce que**
une partie au moins des corps de transport (8) est pourvue d'un entraînement, en particulier d'un entraînement sans conducteur,
et/ou **en ce que**
le système comprend deux rames (I, II) de véhicules de convoyage (1) qui sont susceptibles d'être réunies pour échanger entre eux leurs corps de transport (8),
et/ou **en ce que**
une partie au moins des véhicules de convoyage (1), en particulier tous les véhicules de convoyage comprennent au moins deux voies de transport (6, 7) parallèles l'une à l'autre, qui, les véhicules de convoyage (1) étant couplés ensemble, se raccordent l'une à l'autre et le long desquelles les corps de transport (8) sont déplaçables, de préférence chacun dans les deux directions ou dans des directions opposées, et de préférence deux voies de transport s'étendent l'une à côté ou au-dessus de l'autre sur les véhicules de convoyage (1),
et/ou **en ce que**
au moins un véhicule de convoyage (1) comprend un dispositif pour enlever temporairement au moins un corps de transport (8) hors d'une voie de transport (6, 7) ou pour échanger des corps de transport (8) entre deux voies de transport (6, 7), et de préférence
il est prévu un dispositif de commande permettant de trier les corps de transport (8) sur les voies de transport (6, 7).

7. Système selon l'une des revendications précédentes,
**caractérisé en ce que**
ledit au moins un véhicule de travaux routiers comprend au moins une voie de transport (6, 7) pour déplacer des corps de transport (8) le long du véhicule de travaux routier, la voie de transport (6, 7) du véhicule de travaux routiers étant réalisée de préférence de manière à se raccorder à une voie de transport (6, 7) d'un véhicule de convoyage (1) couplé ensemble avec le véhicule de travaux routiers, et en particulier
pour exécuter des travaux au niveau de la route ou du sous-sol de la route, il est prévu un parc d'engins comprenant une pluralité de véhicules de travaux routiers, chacun parmi la pluralité de véhicules de travaux routiers comprenant au moins une voie de transport (6, 7), et de préférence au moins un véhicule de convoyage respectif (1) est agencé, par rapport à une direction de travail, de part et d'autre du véhicule de travaux routiers ou de la pluralité de véhicules de travaux routiers de telle sorte que sa voie de transport (6, 7) se raccorde à la voie de transport (6, 7) du véhicule de travaux routiers.

8. Procédé pour nouvellement construire, rénover ou démonter une route, en particulier une autoroute,
dans lequel
à l'aide d'au moins un véhicule de travaux routiers, des travaux sont exécutés au niveau de la route ou du sous-sol de la route, et à cet effet des objets sont transportés vers ou depuis le véhicule de travaux routiers,
les objets étant transportés à l'aide d'une pluralité de véhicules de convoyage (1) susceptibles d'être couplés ensemble, les véhicules de convoyage (1) comprenant chacun au moins une voie de transport (6, 7) sur laquelle les objets peuvent être déplacés le long des véhicules de convoyage (1) et qui est réalisée de telle sorte que les voies de transport (6, 7) de véhicules de convoyage (1) couplés ensemble se raccordent les unes aux autres,
**caractérisé en ce que**
les objets sont transportés sur les véhicules de convoyage (1) à l'aide de corps de transport (8), au moins un corps de transport (8) étant réalisé comme un conteneur ouvert ou fermé pour les objets ou comme un support en forme de panneau pour les objets, et
les corps de transport (8) sur les véhicules de convoyage (1) sont déplacés d'un véhicule de convoyage (1) à un autre véhicule de convoyage (1) le long de voies de transport (6, 7) qui se raccordent les unes aux autres et qui s'étendent de préférence au moins sensiblement horizontalement et/ou se raccordent les unes aux autres sans gradin, et ils sont déplacés en particulier directement sur les voies de transport (6, 7) et/ou en particulier sans moyens de chargement supplémentaires, tels que des grues.

9. Procédé selon la revendication 8,
**caractérisé en ce que**
les corps de transport (8) sont déplacés le long d'au moins deux voies de transport (6, 7) parallèles l'une à l'autre qui sont prévues sur une partie au moins des véhicules de convoyage (1), en particulier sur tous les véhicules de convoyage, les corps de transport (8) sur les voies de transport (6, 7) étant déplacés de préférence dans les deux directions ou dans des directions opposées, et/ou **en ce que**
des corps de transport (8) peuvent être retriés par enlèvement temporaire hors d'une voie de transport (6, 7) et/ou par changement entre les voies de transport (6, 7) sur les véhicules de convoyage (1), et/ou **en ce que** les corps de transport (8) sont déplacés individuellement, par groupes ou tous conjointement, et/ou **en ce que**
les corps de transport (8) sont échangés entre une première rame (I) constituée de véhicules de convoyage (1) et une seconde rame (II) constituée de véhicules de convoyage (1), la première rame (I) constituée de véhicules de convoyage (1) constituant un module de construction conjointement avec le véhicule de travaux routiers pendant les travaux à exécuter, et la seconde rame (II) constituée de véhicules de convoyage (1) fait la navette entre la première rame (I) constituée de véhicules de convoyage (1) et un moyen d'approvisionnement et d'évacuation, en particulier un emplacement de stockage, pendant les travaux à exécuter.

10. Procédé selon la revendication 8 ou 9,
**caractérisé en ce que**
l'amenée et l'évacuation de matériaux vers ou depuis un véhicule de travaux routiers s'effectuent simultanément, et/ou l'amenée et l'évacuation de matériaux vers ou depuis un véhicule de travaux routiers s'effectuent sur le même côté du véhicule de travaux routiers, et/ou **en ce que**
différents matériaux sont amenés et/ou évacués simultanément vers ou depuis le véhicule de travaux routiers.

11. Procédé selon l'une des revendications 8 à 10,
**caractérisé en ce que**
le matériau est livré vers un véhicule de travaux routiers sur une voie de transport (6 ou 7) et est évacué depuis un véhicule de travaux routiers sur une autre voie de transport (6 ou 7), ou **en ce que** les corps de transport (8) sont déplacés en étant pleins sur l'une des voies de transport (6 ou 7) et en étant vides sur l'autre voie de transport (6 ou 7), et/ou **en ce que**
pour l'échange, des corps de transport (8) sont prélevés latéralement depuis les véhicules de convoyage (1), et/ou **en ce que** après un approvisionnement et/ou une évacuation d'un véhicule de travaux routiers à l'aide d'une première rame (I) constituée de véhicules de convoyage (1), une seconde rame (II) constituée de véhicules de convoyage (1) est rapprochée, et **en ce que**
les corps de transport (8) de la première rame (I) sont alors échangés contre les corps de transport (8) de la seconde rame (II) par déplacement des corps de transport (8) le long des voies de transport (6, 7).

12. Véhicule de convoyage destiné à l'utilisation dans un système ou dans un procédé selon l'une des revendications précédentes, comportant un train de roulement au sol et au moins une voie de transport (6, 7) sur laquelle des objets sont déplaçables le long du véhicule de convoyage (1), **caractérisé en ce que**
il est prévu un entraînement pour déplacer des corps de transport (8) conformément au système défini par les revendications 1 à 3, 5 à 7, ou au procédé défini par les revendications 8, 9, le long des voies de transport (6, 7).

13. Véhicule de convoyage selon la revendication 12,
**caractérisé en ce que**
il est prévu un entraînement latéralement à côté de la voie de transport (6, 7),
et/ou **en ce que**
il est prévu un entraînement dans la voie de transport (6, 7),
et/ou **en ce que**
il est prévu au moins deux voies de transport (6, 7) parallèles l'une à l'autre et agencées en particulier à côté et/ou au-dessus l'une de l'autre,
et/ou **en ce que**
il est prévu un dispositif pour enlever temporairement un corps de transport (8) hors d'une voie de transport (6, 7) et/ou un dispositif pour changer un corps de transport (8) entre deux voies de transport (6, 7),
et/ou **en ce que**
les voies de transport (6, 7) sont formées par des voies de déplacement, des voies à rouleaux, des voies à glissière, des voies de suspension, des voies d'accrochage, des bandes transporteuses, des voies à chaînes transporteuses ou similaires,
et/ou **en ce que**
il n'est pas prévu de moyens de chargement supplémentaires, tels que de grues, pour déplacer les corps de transport (8).

14. Véhicule de convoyage selon la revendication 12 ou 13,
**caractérisé en ce que**
il est prévu des moyens pour verrouiller des corps de transport (8) par rapport à une voie de transport (6, 7) ou par rapport au véhicule de convoyage (1),
et/ou **en ce que**
il est prévu une possibilité de chargement et/ou de convoyage supplémentaire pour des marchandises telles que des liquides ou des gaz, et/ou **en ce que**
il est prévu des moyens supplémentaires, tels qu'une alimentation en courant, un convertisseur, un moyen de freinage, qui peuvent servir également à d'autres véhicules de convoyage (1),
et/ou **en ce que**
il prévu un moyen pour le couplage rigide du véhicule de convoyage (1) à un autre véhicule de convoyage (1),
et/ou **en ce que**
les voies de transport (6, 7) s'étendent au moins sensiblement horizontalement et/ou sont réalisées pour le raccordement sans gradin avec une voie de transport correspondante (6, 7) d'un autre véhicule de convoyage (1) de ce type.

15. Véhicule de convoyage selon l'une des revendications 12 à 14,
**caractérisé en ce que**
il est prévu un moyen de chargement et/ou de déchargement automatique (14) pour échanger des marchandises avec un véhicule de travaux routiers ou avec un emplacement de chargement et/ou de déchargement, et/ou **en ce que**
il est prévu un moyen pour recevoir des signaux de commande à distance, et/ou **en ce que**
il est prévu une possibilité de prélèvement latéral pour les corps de transport (8) ou un moyen pour l'échange, s'effectuant le long de la direction d'avance du véhicule de convoyage (1), de corps de transport (8) avec des corps de transport (8) stockés au sol,
et/ou **en ce que**
les voies de transport (6, 7) et l'entraînement sont réalisés pour déplacer des corps de transport individuels (8) qui présentent chacun un poids d'au moins 500 kg, de préférence d'au moins 1000 kg.
